# FASCICULE DE BREVET EUROPEEN

(11) **EP 1 293 026 B1**
(45) Date de publication et mention de la délivrance du brevet: **16.10.2013**
(21) Numéro de dépôt: 02730372.6
(22) Date de dépôt: 26.04.2002
(51) Int. Cl.: H02K 9/06, F04D 29/30, F04D 29/28, F04D 29/66

(54) **VENTILATEUR POUR MACHINE ELECTRIQUE TOURNANTE**
VENTILATOR FÜR DREHENDE ELEKTRISCHE MASCHINE
FAN FOR ROTATING ELECTRIC MACHINE

(30) Priorité: 27.04.2001 FR 0105772
(43) Date de publication de la demande: 19.03.2003
(73) Titulaire: VALEO EQUIPEMENTS ELECTRIQUES MOTEUR, 94017 Créteil (FR)
(72) Inventeur: VASILESCU, Claudiu, F-75020 Paris (FR)
(86) Numéro de dépôt international: PCT/FR2002/001446
(87) Numéro de publication internationale: WO 2002/089299

(56) Documents cités:
- EP-A- 0 293 277
- EP-A- 0 920 110
- US-A- 6 023 112
- PATENT ABSTRACTS OF JAPAN vol. 012, no. 221 (E-625), 23 juin 1988 (1988-06-23) & JP 63 015652 A (MITSUBA ELECTRIC MFG CO LTD), 22 janvier 1988 (1988-01-22)
- PATENT ABSTRACTS OF JAPAN vol. 1997, no. 11, 28 novembre 1997 (1997-11-28) & JP 09 201009 A (DENSO CORP), 31 juillet 1997 (1997-07-31)

## Description

### Domaine technique de l'invention

La présente invention se rapporte à une machine électrique tournante, notamment pour alternateur de véhicule automobile.

Plus particulièrement l'invention se rapporte au dispositif de ventilation que comporte une telle machine.

### Etat de la technique

Une machine électrique tournante, du type monophasé ou polyphasé comporte au moins deux parties agencées d'une manière coaxiale, à savoir un rotor et un stator, constituant l'un un induit et l'autre un inducteur.

Le rotor porte généralement, au moins à une extrémité axiale, un ventilateur pour refroidir la machine. En effet, l'un au moins des éléments induit-inducteur comporte un bobinage qui chauffe de sorte qu'il faut refroidir celui-ci pour un bon fonctionnement de la machine. Cette machine porte le plus souvent des composants électroniques ainsi que des roulements à billes qu'il faut également refroidir à l'aide d'une circulation d'air ou, d'une manière générale, d'un fluide de refroidissement, engendrée par le ventilateur.

Lorsque l'induit est formé par le rotor, la machine constitue un moteur électrique et transforme de l'énergie électrique en énergie mécanique. Cette machine transforme de l'énergie mécanique en énergie électrique lorsque l'induit est formé par le stator pour fonctionner en générateur électrique et constituer par exemple un alternateur. Bien entendu, la machine électrique peut être réversible pour former par exemple un alterno-démarreur de véhicule automobile permettant de démarrer le moteur du véhicule tout en ayant une fonction d'alternateur.

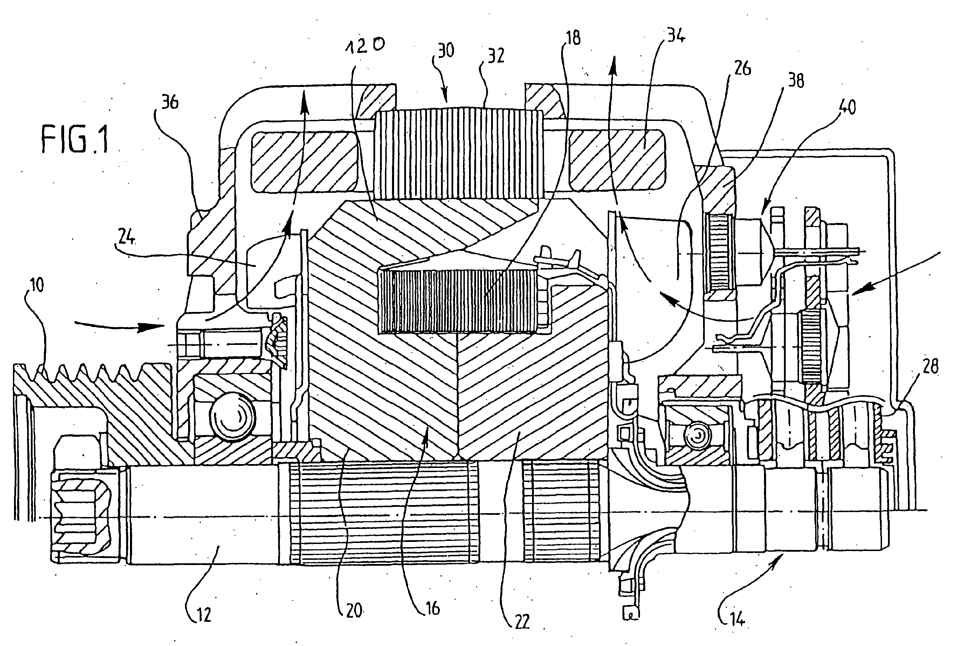

La figure 1 représente une machine électrique tournante polyphasée sous la forme d'un alternateur du type triphasé pour véhicule automobile à moteur à combustion interne.

L'alternateur comporte, en allant de la gauche vers la droite de la figure 1, c'est-à-dire d'avant en arrière, une poulie d'entraînement 10 solidaire de l'extrémité avant d'un arbre 12, dont l'extrémité arrière porte des bagues collectrices (non référencées) appartenant à un collecteur 14. L'axe de l'arbre 12 constitue l'axe de rotation de la machine.

Centralement, l'arbre 12 porte à fixation le rotor 16 qui est doté d'un bobinage d'excitation 18, dont les extrémités sont reliées par des liaisons filaires au collecteur 14. Pour plus de précision on se reportera au document EP-A-0 515 259.

Le stator de la machine électrique constituant notamment un alternateur ou un alternateur-démarreur peut être bobiné aussi bien avec des fils qu'avec des barres de conducteur, avantageusement conformés en forme d'épingles de section rectangulaire, que l'on place dans les encoches du stator. Les bobinages ainsi réalisés peuvent être de type triphasé ou hexaphasé. Les conducteurs desdites épingles en forme de U sont de préférence alignés dans les encoches. Pour plus de précisions, on se reportera à la demande de brevet français N° 01 04770 déposée le 5 avril 2001 ou à la demande française N°01 13553 déposée le 19/10/2001.

Le rotor 16 est ici un rotor à griffes, c'est à dire un rotor pourvu extérieurement de dents 120 d'orientation axiale délimitant entre elles un passage d'écoulement de fluide de refroidissement, et comporte donc deux roues polaires 20, 22, respectivement avant et arrière, portant chacune respectivement un ventilateur avant 24 et un ventilateur arrière 26. Plus précisément chaque roue polaire comporte un flasque d'orientation transversale portant à sa périphérie externe des dents 120 d'orientation axiale et globalement de forme trapézoïdale. Les dents d'une des roues polaires sont dirigées vers l'autre roue polaire ; les dents d'une des roues polaires étant montées de manière imbriquée avec les dents de l'autre roue polaire. Un noyau cylindrique intervient axialement entre les deux flasques des roues polaires pour montage du bobinage d'excitation 18. Le noyau est dans une forme de réalisation distinct des flasques des roues 20, 22. A la figure 1 chaque flasque présente centralement un demi- noyau cylindrique pour former le noyau cylindrique. Les roues 20, 22 sont en matériau magnétique et définissent, de manière connue, lorsque le bobinage 18 est excité des pôles Nord-Sud. Ici il est définit 6 à 8 paires de pôles ; chaque roue 20,22 comportant 6 à 8 dents réparties circonférentiellement de manière régulière. Le ventilateur arrière 26 est plus puissant que le ventilateur avant 24.

Ces ventilateurs 24, 26 comportent une première série de pales ou aubes, qui ménagent entre elles des canaux de ventilation. Les pales sont obtenues par découpe et pliage d'un flasque en tôle fixé, par exemple par soudage ou par tout autre moyen approprié tel qu'un sertissage, sur la roue polaire 20, 22 concernée. Les pales du ventilateur arrière ont une plus grande étendue que celles du ventilateur avant. Chaque roue présente de manière précitée des dents axiales dirigées vers l'autre roue avec imbrication des dents d'une roue à l'autre pour formation de pôles magnétiques lorsque le bobinage 18 est activé grâce aux bagues collectrices du collecteur 14 qui sont chacune en contact avec un balai (non référencé) porté par un porte balai 28 servant également de support à un régulateur de tension (non représenté).

Le stator 30, quant à lui, forme l'induit de l'alternateur et entoure le rotor 16.

Il présente un corps 32 sous la forme d'un paquet de tôles doté intérieurement d'encoches axiales (non représentées) pour le passage de fils ou d'épingles que comportent les bobinages 34 du stator 30. Ces bobinages 34 sont pourvus de chignons (non référencés) s'étendant, d'une part, en saillie de part et d'autre du corps 32 et, d'autre part, radialement au-dessus des ventilateurs 24, 26.

Les sortie des bobinages 34 sont reliées à un dispositif de redressement 40, ici à diodes, pour redresser le courant alternatif produit par le stator.

Ces ventilateurs 24, 26 s'étendent au voisinage respectivement d'un palier avant 36 et d'un palier arrière 38.

Les paliers 36,38 sont par exemple à base d'aluminium et sont relies entre eux par exemple à l'aide de tirants pour former un carter de support pour le stator et le rotor. Les paliers 36, 38 sont de forme creuse et comportent chacun un flasque transversal prolongé à sa périphérie externe par un rebord d'orientation axiale. Le corps 32 du stator est porté par les rebords des paliers 36,38 en étant intercalé entre ceux-ci. Les flasques des paliers 36, 38 portent chacun centralement un roulement à billes pour le montage à rotation de l'arbre 12 de fixation du rotor 16. Ces paliers sont ajourés pour une ventilation interne de l'alternateur par l'intermédiaire des ventilateurs 24, 26 lorsque ces derniers sont entraînés en rotation par la poulie 10, laquelle est reliée au moteur du véhicule automobile par un dispositif de transmission comportant au moins une courroie en prise avec la poulie. Cette ventilation permet de refroidir les bobinages 18, 34 ainsi que le porte balai 28 avec son régulateur ainsi qu'un dispositif de redressement 40 qui lui est associé. On a représenté par des flèches le trajet suivi par le fluide de refroidissement, en l'espèce de l'air, à travers les différentes ouvertures des paliers 36, 38 et à l'intérieur de la machine. Plus précisément le flasque du palier arrière porte le dispositif de redressement ainsi que le porte balais 28 et le régulateur. Les paliers 36,38 présentent chacun des ouïes d'admission d'air réalisées dans leur flasque et des ouïes d'échappement d'air réalisées dans leur rebord en regard des chignons des bobinages 34.

En raison de la nature des ventilateurs 24 et 26, qui sont classiquement constitués par des ventilateurs de type centrifuge, le trajet de l'air dans l'alternateur est essentiellement radial.

Les débits électriques demandés à l'alternateur augmentent beaucoup avec l'augmentation du nombre et de la puissance des éléments de consommation embarqués à bord des véhicules automobiles. Cette augmentation du débit électrique engendre une augmentation consécutive de la température des parties les plus chaudes de l'alternateur comme les diodes du dispositif de redressement 40, les roulements, le rotor, ...

Le document EP-A-0920110 décrit également une machine électrique tournante correspondant à l'art antérieur.

### Objet de l'invention

Le dispositif de ventilation dont est pourvu l'alternateur, bien qu'étant suffisamment efficace pour assurer le refroidissement des différents éléments de l'alternateur pour des débits électriques relativement modérés est peu adapté pour assurer le refroidissement de l'alternateur pour des débits plus importants.

Pour des débits électriques élevés, la taille ou le gabarit des ventilateurs doit être accrue, ce qui engendre l'apparition de bruits rédhibitoires et d'écoulements turbulents néfastes pour le rendement du dispositif de ventilation.

Le but de l'invention est de pallier ces inconvénients.

Elle a donc pour objet une machine électrique tournante, comprenant un rotor muni de roues polaires dotées chacune de dents, au moins un ventilateur solidaire du rotor et pourvu de pales en nombre supérieur à celui des dents de chaque roue polaire ; les pales ménageant entre elles des canaux de ventilation divergeant et étant adaptées pour engendrer un flux de fluide de refroidissement à travers la machine, essentiellement caractérisé en ce que l'angle d'incidence des pales, au niveau du bord d'attaque est compris entre 150° et 175°, en ce que l'angle d'incidence des pales, au niveau du bord de fuite, est compris entre 90° et 165° par rapport à la tangente à un cercle engendré lors de la rotation des pales et en ce que le rapport entre le pas moyen des pales et la longueur moyenne de ces dernières est inférieure 0,975.

Selon une caractéristique lorsque la machine comporte deux ventilateurs solidaires du rotor, le nombre de pales du ventilateur avant est supérieur au nombre de pales du ventilateur arrière. Ainsi le bruit émis par le ventilateur avant est réduit. En effet, l'augmentation du nombre de pales d'un ventilateur permet, à puissance égale, de réduire le diamètre du ventilateur, ce qui a pour effet de réduire le bruit. L'augmentation du nombre de pales permet aussi d'augmenter le nombre d'harmoniques, de manière à enrichir le spectre des harmoniques, afin d'obtenir un bruit blanc autant que possible.

De bons résultats ont été obtenus en dotant le ventilateur avant de 11 pales et le ventilateur arrière de 9 pales ; les pales du ventilateur arrière ayant une étendue supérieure à celles du ventilateur avant.

Selon un mode de réalisation avantageux, le ventilateur avant possède un diamètre inférieur à celui du ventilateur arrière.

Dans différents modes de réalisation, ce dispositif de ventilation peut également comporter une ou plusieurs des caractéristiques suivantes, prises isolément ou selon toutes les combinaisons techniquement possibles :
- les canaux de ventilation ont une section d'entrée de forme générale carrée ;
- les pales comportent une premier ensemble de pales ménageant entre elles lesdits canaux de ventilation et un deuxième ensemble de pales, dites deuxièmes pales, plus courtes que le premier ensemble de pales et implantées radialement au-dessus de la périphérie interne du premier ensemble de pales dans au moins un canal, de sorte qu'au moins une pale du deuxième ensemble de pales est intercalée entre deux pales consécutives du premier ensemble de pales ;
- au moins certaines des pales des premier et deuxième ensembles de pales ont une hauteur décroissante de la périphérie interne vers la périphérie externe ;
- au moins un canal est dépourvu de deuxième pale ;
- l'une au moins des pales des premier et deuxième ensembles de pales est répartie de manière irrégulière par rapport aux autres pales ;
- l'une au moins des pales des premier et deuxième ensembles de pales sont dotées en surplomb par rapport au fond des canaux d'une surface adaptée pour éviter une circulation secondaire du fluide de refroidissement au-dessus de ladite pale ;
- ladite surface est constituée par une ailette s'étendant de façon perpendiculaire ou inclinée à partir de la pale ;
- ladite surface est formée par un couvercle recouvrant les pales.

### Description sommaire des dessins

D'autres buts, caractéristiques et avantages ressortiront de la description suivante, donnée uniquement à titre d'exemple non limitatif, et faite en référence aux dessins annexés sur lesquels :
- La figure 1 illustre une demi-vue en coupe axiale d'un alternateur de véhicule automobile doté d'un dispositif de ventilation conforme à l'état de la technique ;
- La figure 2 est une vue de dessus d'un exemple de réalisation d'un ventilateur du dispositif selon l'invention ;
- La figure 3 est une variante de réalisation d'un ventilateur du dispositif de ventilation selon l'invention;
- La figure 4 illustre un troisième exemple de réalisation d'un ventilateur d'un dispositif de ventilation conforme à l'invention.
- La figure 5 est une vue en perspective illustrant un quatrième exemple de réalisation d'un ventilateur d'un dispositif de ventilation conforme à l'invention, et
- La figure 6 est une vue en perspective d'un cinquième exemple de réalisation d'un ventilateur d'un dispositif de ventilation selon l'invention.

### Descriptions de modes de réalisation préférentiels de l'invention

On notera que, dans ces différents modes de réalisation, le carter de l'alternateur pour véhicule automobile, dans lequel sont disposés le rotor et le stator, est doté de manière précitée d'un palier avant et d'un palier arrière pourvu chacun d'ouïes d'admission et d'échappement d'air disposées respectivement à l'avant et à l'arrière, de manière à permettre une admission et un échappement efficace de l'air, au cours du fonctionnement de l'alternateur. Plus précisément ont utilise un alternateur du type de la figure 1 comportant un rotor avec deux roues polaires sur lesquelles sont fixées respectivement un ventilateur avant et un ventilateur arrière de manière précitée. Les ventilateurs selon l'invention se montent en lieu et place des ventilateurs 26 et 24 de la figure 1.

Dans l'invention le ventilateur arrière est doté d'un nombre de pales inférieur à celui du ventilateur avant. Les pales du ventilateur arrière ont une plus grande étendue que celles du ventilateur avant en sorte que le ventilateur arrière est plus puissant. Le nombre de pales de chaque ventilateur est supérieur au nombre de dents des roues polaires.

Pour obtenir un fonctionnement efficace des ventilateurs, il est nécessaire d'utiliser des ventilateurs dont les pales sont adaptées pour obtenir un rendement relativement élevé, un écoulement stable ou peu turbulent, et permettant d'éviter tout décollement des veines de fluide par rapport aux pales. Pour ce faire, on utilise des pales dont l'angle d'incidence, au niveau du bord d'attaque, c'est à dire l'angle délimité par les pales et la tangente au cercle engendré par ces dernières au cours de leur rotation, est compris entre 150° et 175°, l'angle d'incidence des pales, au niveau du bord de fuite, étant compris entre 90° et 165° par rapport à la tangente au cercle engendré, par la rotation du bord de fuite, en fonctionnement.

De même suivant une caractéristique importante de l'invention, les pales sont choisies de manière que les canaux inter-aubages, c'est à dire les canaux délimités par les pales, ont un rapport entre le pas moyen et la longueur de chaque pale relativement faible, de préférence inférieur à 0,975, avec une section d'entrée sensiblement carrée. On évitera de même, dans les pales toute discontinuité de surface de guidage au sein des canaux inter-aubages de manière que le fluide soit guidé sans perte et reste stable, et ne subisse pas de décollement par rapport aux pales.

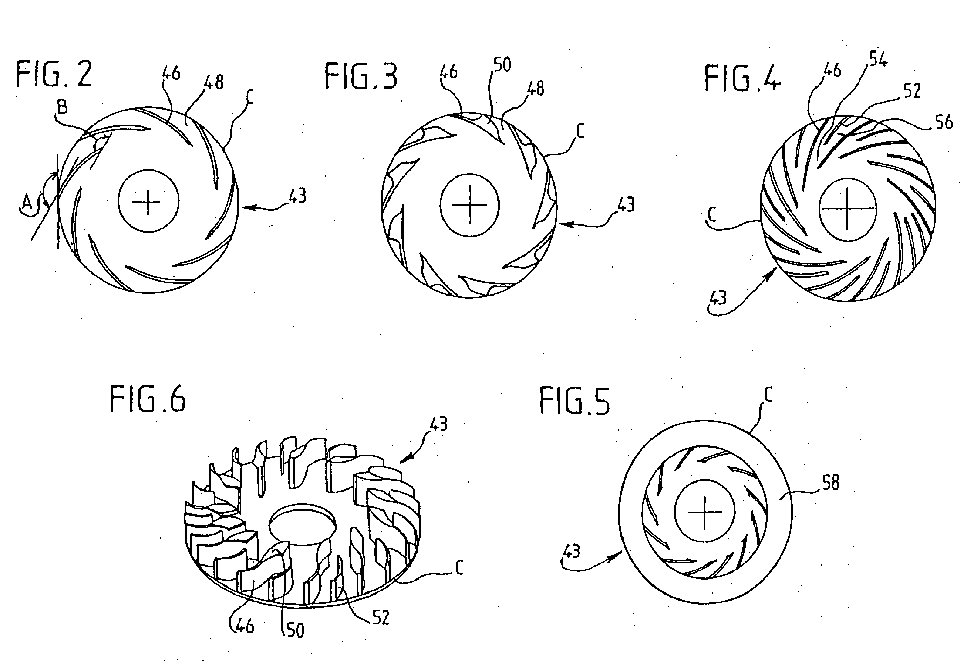

On a représenté sur la figure 2 en premier exemple de réalisation d'un ventilateur permettant d'obtenir ces caractéristiques.

Comme on le voit sur cette figure, le ventilateur, ici le ventilateur arrière désigné par la référence numérique générale 43, comporte des pales, telles que 46, appelées également aubes, ménageant entre elles des canaux de ventilation 48 ou inter-aubages divergeant vers l'extérieur et à l'intérieur desquelles circule le fluide de refroidissement lorsque le rotor de la machine, et donc le ventilateur solidaire du rotor par tout moyen approprié, tourne.

Les canaux 48 s'évasent en allant de la périphérie interne à la périphérie externe des pales 46.

Comme indiqué précédemment, dans le but d'obtenir, à l'entrée et à la sortie, un fluide ayant un minimum de perturbation les angles d'incidence en entrée, désignés par B, sont compris entre 150° et 175°, les angles d'incidence en sortie, désignés par la référence A étant compris entre 90 ° et 165°. Ces angles sont délimités par la surface des pales et la tangente au cercle C formé lors de la rotation des pales, ou une parallèle à cette dernière. Ici le ventilateur arrière comporte 9 pales et le ventilateur avant 11 pales. Il en est de même dans le mode de réalisation de la figure 3. Dans les autres figures le nombre de pales est supérieur. Néanmoins on a constaté avec une combinaison de 11 pales pour le ventilateur avant et de 9 pales pour le ventilateur arrière, une réduction du bruit de la machine par rapport aux autres modes de réalisation.

En référence à la figure 3, dans le but d'éviter l'apparition d'écoulements secondaires au niveau du bord de fuite, certaines au moins des pales sont dotées, en surplomb par rapport au fond des canaux 48, d'une ailette, telle que 50, s'étendant de façon perpendiculaire ou inclinée par rapport aux pales, évitant une circulation secondaire du fluide au-dessus de ces pales.

Il peut également être souhaitable de régulariser encore plus la vitesse du fluide de refroidissement afin que celle-ci soit la plus constante possible et ce avec un minimum de perturbation.

Aussi, éventuellement en combinaison avec l'utilisation d'ailettes, certaines au moins de ces pales ont une hauteur décroissante de leur périphérie interne vers leur périphérie externe.

Selon une autre variante, visible sur la figure 4, éventuellement en combinaison avec l'utilisation d'ailettes et avec la hauteur décroissante des pales, dans le but de diminuer les bruits de la machine électrique, tout en améliorant la ventilation de celle-ci, entre deux pales 46 consécutives, on intercale une pale secondaire, telle que 52, d'une part, plus courte que les pales 46 principales, et d'autre part, implantée radialement au-dessus de la périphérie interne des pales principales 46, certains des canaux de ventilation 48 pouvant cependant être dépourvus de telle pale secondaire 52.

Les canaux de ventilation 48 sont ainsi subdivisés en deux parties 54 et 56, à savoir une partie radialement interne 54 s'étendant radialement en-dessous de la périphérie interne de la pale secondaire 52 et une partie radialement externe 56 dans laquelle est logée la pale secondaire pour comprimer le fluide de refroidissement afin que celui-ci soit en contact avec les pales principales 46. On notera que les pales secondaires peuvent également être pourvues d'une ailette d'extrémité 50 s'étendant de façon perpendiculaire ou inclinée à partir de la pale correspondante.

Enfin, comme on le voit sur la figure 4, les pales peuvent être réparties angulairement de façon régulière ou irrégulière par rapport aux autres pales. Cependant, dans le cas ou l'on dispose les pales de façon irrégulière, on réduit encore les bruits de fonctionnement des ventilateurs.

On notera enfin qu'une invention n'est pas limitée aux modes de réalisation décrits.

En effet, alors que dans le mode de réalisation décrit en référence à la figure 3, les pales peuvent être pourvues d'ailettes empêchant l'apparition d'un écoulement secondaire au-dessus des pales, il est possible, en variante, de remplacer ces ailettes par un couvercle recouvrant tout ou partie les pales, de manière à éviter l'apparition d'un écoulement secondaire dans cette zone. La figure 5 montre en 58 un tel couvercle. Celui-ci est réalisé sous forme d'un disque annulaire qui est fixé sur les bords libres des pales, avantageusement par collage ou toute autre manière connue appropriée. Cependant, le ventilateur avec le couvercle pourrait être obtenu en une seule pièce.

La figure 6 montre un mode de réalisation du ventilateur, selon lequel des pales secondaires telles que des pales 52 de la figure 4 sont disposées entre deux pales 46 pourvues d'ailettes 50 de la figure 3.

Ici le nombre de dents de chaque roue polaire est compris entre 6 et 8 en sorte que la machine comporte 6 à 8 paires de pôles. Le ventilateur arrière comporte donc dans tous les cas un nombre de pales supérieur au nombre de dents d'une des roues polaires.

De très bons résultats et performances ont été obtenus avec un rotor à 7 paires de pôles et un corps de stator de diamètre extérieur compris entre 132mm et 138 mm les bobinages étant du type de ceux décrits dans le document FR 01 13353 précité auquel on se reportera pour pus de précisions. Ainsi les bobinages comportent des éléments conducteurs en forme de U de section rectangulaire à raison de 4 conducteurs juxtaposés dans chaque encoche que comporte de manière connue le corps du stator.

Bien entendu dans certaines applications onpeut supprimer le ventilateur avant.

## Revendications

1. Machine électrique tournante, comprenant un rotor (16) muni de roues polaires (20,22 dotées chacune de dents(120), au moins un ventilateur (43) solidaire du rotor (16) et pourvu de pales (46) en nombre supérieur à celui des dents (120) de chaque roue polaire (20,22), les pales (46) ménageant entre elles des canaux de ventilation (48) divergeant et adaptées pour engendrer un flux de fluide de refroidissement à travers la machine, **caractérisé en ce que** l'angle d'incidence (B) des pales, au niveau du bord d'attaque est compris entre 150° et 175°, **en ce que** l'angle d'incidence (A) des pales, au niveau du bord de fuite, est compris entre 90° et 165° par rapport à la tangente à un cercle engendré lors de la rotation des pales et **en ce que** le rapport entre le pas moyen des pales (46) et la longueur moyenne de ces dernières est inférieure 0,975.

2. Machine selon la revendication 1, **caractérisé en ce qu'**elle comporte deux ventilateurs (24,26) respectivement un ventilateur avant (24) et un ventilateur arrière (26) dont les pales (46) ont une plus grande étendue que celles du ventilateur avant (26) et **en ce que** le nombre de pales du ventilateur avant (24) est supérieur au nombre de pales du ventilateur arrière (26).

3. Machine selon la revendication 2, **caractérisée en ce que** le ventilateur avant comporte onze pales et le ventilateur arrière neuf pales

4. Machine selon la revendication 2, **caractérisée en ce que** le ventilateur avant possède un diamètre inférieur à celui du ventilateur arrière.

5. Machine selon la revendication 1, **caractérisé en ce que** les canaux de ventilation (48) ont une section d'entrée de forme générale carrée.

6. Machine selon la revendication 1, **caractérisé en ce que** les pales comportent une premier ensemble de pales (46) ménageant entre elles lesdits canaux de ventilation et un deuxième ensemble de pales (52), dites deuxièmes pales, plus courtes que le premier ensemble de pales et implantées radialement au-dessus de la périphérie interne du premier ensemble de pales dans au moins un canal, de sorte qu'au moins une pale du deuxième ensemble de pales est intercalée entre deux pales consécutives du premier ensemble de pales.

7. Machine selon la revendication la revendication 6, **caractérisé en ce qu'**au moins certaines des pales des premier et deuxième ensembles de pales (46, 52) ont une hauteur décroissante de la périphérie interne vers la périphérie externe.

8. Machine selon la revendication 6, **caractérisé en ce qu'**au moins un canal est dépourvu de deuxième pale.

9. Machine selon la revendications 6, **caractérisé en ce que** l'une au moins des pales des premier et deuxième ensembles de pales (46, 52) est répartie de manière irrégulière par rapport aux autres pales.

10. Machine selon la revendication 6, **caractérisé en ce que** l'une au moins des pales des premier et deuxième ensembles de pales (46, 52) sont dotées en surplomb par rapport au fond des canaux d'une surface (50) adaptée pour éviter une circulation secondaire du fluide de refroidissement au dessus de ladite pale.

11. Machine selon la revendication 10, **caractérisé en ce que** ladite surface est constituée par une ailette (50) s'étendant de façon perpendiculaire ou inclinée à partir de la pale.

12. Machine selon la revendication 10, **caractérisé en ce que** ladite surface est formée par un couvercle (58) recouvrant les pales.

13. Machine selon la revendication 1, **caractérisée en ce qu'**elle consiste en un alternateur pour véhicule automobile.

## Patentansprüche

1. Drehende elektrische Maschine, umfassend einen Rotor (16), der mit Polrädern (20, 22) versehen ist, die jeweils mit Zähnen (120) ausgestattet sind, mindestens einen Ventilator (43) der mit dem Rotor (16) verbunden und mit Flügeln (46) in einer größeren Anzahl als jene der Zähne (120) jedes Polrades (20, 22) versehen ist, wobei die Flügel (46) zwischen sich Ventilationskanäle (48) aussparen, die divergieren und dazu vorgesehen sind, einen Kühlfluidstrom durch die Maschine zu erzeugen, **dadurch gekennzeichnet, dass** der Anstellwinkel (B) der Flügel im Bereich der Vorderkante zwischen 150° und 175° beträgt, dass der Anstellwinkel (A) der Flügel im Bereich der Hinterkante zwischen 90° und 165° in Bezug auf die Tangente an einen Kreis beträgt, der bei der Drehung der Flügel erzeugt wird, und dass das Verhältnis zwischen der durchschnittlichen Höhe der Flügel (46) und der durchschnittlichen Länge dieser letztgenannten kleiner als 0,975 ist.

2. Maschine nach Anspruch 1, **dadurch gekennzeichnet**, das sie zwei Ventilatoren (24, 26) umfasst, einen vorderen Ventilator (24) bzw. einen hinteren Ventilator (26), dessen Flügel (46) ein größeres Ausmaß als jene des vorderen Ventilators (24) haben, und dass die Anzahl von Flügeln des vorderen Ventilators (24) größer als die Anzahl von Flügeln des hinteren Ventilators (26) ist.

3. Maschine nach Anspruch 2, **dadurch gekennzeichnet, dass** der vordere Ventilator elf Flügel und der hintere Ventilator neun Flügel umfasst.

4. Maschine nach Anspruch 2, **dadurch gekennzeichnet, dass** der vordere Ventilator einen Durchmesser, der kleiner als jener des hinteren Ventilators ist, besitzt.

5. Maschine nach Anspruch 1, **dadurch gekennzeichnet, dass** die Ventilationskanäle (48) einen Eingangsquerschnitt von allgemeiner quadratischer Form haben.

6. Maschine nach Anspruch 1, **dadurch gekennzeichnet, dass** die Flügel eine erste Gesamtheit von Flügeln (46), die zwischen sich die Ventilationskanäle aussparen, und eine zweite Gesamtheit von Flügeln (52) umfassen, genannt zweite Flügel, die kürzer als die erste Gesamtheit von Flügeln sind und radial über der inneren Peripherie der ersten Gesamtheit von Flügeln in mindestens einem Kanal eingesetzt sind, so dass mindestens ein Flügel der zweiten Gesamtheit von Flügeln zwischen zwei aufeinander folgenden Flügeln der ersten Gesamtheit von Flügeln angeordnet ist.

7. Maschine nach Anspruch 6, **dadurch gekennzeichnet, dass** mindestens gewisse der Flügel der ersten und zweiten Gesamtheit von Flügeln (46, 52) eine abnehmende Höhe von der inneren Peripherie bis zur äußeren Peripherie haben.

8. Maschine nach Anspruch 6, **dadurch gekennzeichnet, dass** mindestens ein Kanal keinen zweiten Flügel besitzt.

9. Maschine nach Anspruch 6, **dadurch gekennzeichnet, dass** mindestens einer der Flügel der ersten und zweiten Gesamtheit von Flügeln (46, 52) unregelmäßig in Bezug zu den anderen Flügeln angeordnet ist.

10. Maschine nach Anspruch 6, **dadurch gekennzeichnet, dass** mindestens einer der Flügel der ersten und zweiten Gesamtheit von Flügeln (46, 52) überhängend in Bezug zum Boden der Kanäle mit einer Fläche (50) versehen ist, die dazu vorgesehen ist, eine Nebenzirkulation von Kühlfluid über dem Flügel zu vermeiden.

11. Maschine nach Anspruch 10, **dadurch gekennzeichnet, dass** die Fläche von einer Rippe (50) gebildet ist, die sich senkrecht erstreckt oder vom Flügel aus geneigt ist.

12. Maschine nach Anspruch 10, **dadurch gekennzeichnet, dass** die Fläche von einem Deckel (58), der die Flügel bedeckt, gebildet ist.

13. Maschine nach Anspruch 1, **dadurch gekennzeichnet, dass** sie aus einem Generator für ein Kraftfahrzeug besteht.

## Claims

1. Rotating electrical machine, comprising a rotor (16) having pole wheels (20, 22) each featuring teeth (120), at least one fan (43) securely attached to the rotor (16) and provided with a greater number of blades (46) than each pole wheel (20, 22) has teeth (120), the blades (46) creating between them divergent ventilation channels (48) designed to produce a flow of cooling fluid through the machine, **characterized in that** the angle of attack (B) of the blades, at the leading edge, is between 150° and 175°, **in that** the angle of attack (A) of the blades, at the trailing edge, is between 90° and 165° with respect to the tangent to a circle produced during rotation of the blades and **in that** the ratio between the average pitch of the blades (46) and the average length thereof is less than 0.975.

2. Machine according to Claim 1, **characterized in that** it comprises two fans (24, 26), respectively a forward fan (24) and a rear fan (26), the blades (46) of which have a larger span than those of the forward fan (24) and **in that** the number of blades of the forward fan (24) is greater than the number of blades of the rear fan (26).

3. Machine according to Claim 2, **characterized in that** the forward fan comprises eleven blades and the rear fan nine blades.

4. Machine according to Claim 2, **characterized in that** the diameter of the forward fan is smaller than that of the rear fan.

5. Machine according to Claim 1, **characterized in that** the inlet cross section of the ventilation channels (48) is substantially square.

6. Machine according to Claim 1, **characterized in that** the blades comprise a first group of blades (46), which create between them said ventilation channels, and a second group of blades (52), termed second blades, which are shorter than the first group of blades and are positioned radially above the internal periphery of the first group of blades in at least one channel, such that at least one blade from the second group of blades is interposed between two consecutive blades of the first group of blades.

7. Machine according to Claim 6, **characterized in that** at least some of the blades from the first and second groups of blades (46, 52) decrease in height from the internal periphery to the external periphery.

8. Machine according to Claim 6, **characterized in that** at least one channel has no second blade.

9. Machine according to Claim 6, **characterized in that** at least one of the blades from the first and second groups of blades (46, 52) is distributed irregularly with respect to the other blades.

10. Machine according to Claim 6, **characterized in that** at least one of the blades from the first and second groups of blades (46, 52) has, overhanging the base of the channels, a surface (50) designed to avoid a secondary flow of the cooling fluid above said blade.

11. Machine according to Claim 10, **characterized in that** said surface consists of a fin (50) extending from the blade perpendicular thereto or inclined with respect thereto.

12. Machine according to Claim 10, **characterized in that** said surface consists of a cover (58) covering the blades.

13. Machine according to Claim 1, **characterized in that** it consists of an alternator for a motor vehicle.
